# EUROPEAN PATENT APPLICATION

(11) **EP 4 697 812 A1**
(43) Date of publication of application: **18.02.2026**
(21) Application number: 24733841.1
(22) Date of filing: 08.04.2024
(51) Int. Cl.: H04W 52/02, H04W 72/0446, H04L 5/00, H04L 27/02, H04L 27/10

(54) **METHOD AND DEVICE FOR TRANSMITTING AND RECEIVING SIGNAL IN WIRELESS COMMUNICATION SYSTEM**

(30) Priority: 06.04.2023 US 202363457788 P
(71) Applicant: LG ELECTRONICS, INC., Seoul 07336 (KR)
(72) Inventor: CHOI, Seunghwan, Seoul 06772 (KR); KIM, Jaehyung, Seoul 06772 (KR); YANG, Suckchel, Seoul 06772 (KR); KIM, Seonwook, Seoul 06772 (KR); HWANG, Seunggye, Seoul 06772 (KR); BAE, Duckhyun, Seoul 06772 (KR); LEE, Sunghoon, Seoul 06772 (KR)
(74) Representative: Plasseraud IP
(86) International application number: PCT/KR2024/004610
(87) International publication number: WO 2024/210668

(57) **Abstract**

The present disclosure provides a method and apparatus for transmitting and receiving signals in a wireless communication system. According to the method and apparatus, a signal may be received through a first receiver, and a second receiver may be triggered based on the reception of the signal. Based on a bandwidth for the second receiver including a plurality of first subcarriers, positions of second subcarriers allocated to the signal among the first subcarriers may be determined based on a time-domain index for the second receiver.

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### TECHNICAL PROBLEM

The object of the present disclosure is to provide a signal transmission and reception method for efficiently transmitting and receiving reference signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

The present disclosure provides a method and apparatus for transmitting and receiving a signal in a wireless communication system.

In an aspect of the present disclosure, provided herein is a method of transmitting and receiving signals by a user equipment (UE) in a wireless communication system. The method may include: receiving a signal through a first receiver of the UE; and triggering a second receiver of the UE based on the reception of the signal. Based on a bandwidth for the second receiver including a plurality of first subcarriers, positions of second subcarriers allocated to the signal among the first subcarriers may be determined based on a time-domain index for the second receiver.

In another aspect of the present disclosure, provided herein are a UE, a processor, and a storage medium as an apparatus for executing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### ADVANTAGEOUS EFFECTS

According to one embodiment of the present disclosure, when reference signals are transmitted and received between communication devices, the signals may be transmitted and received more efficiently based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.

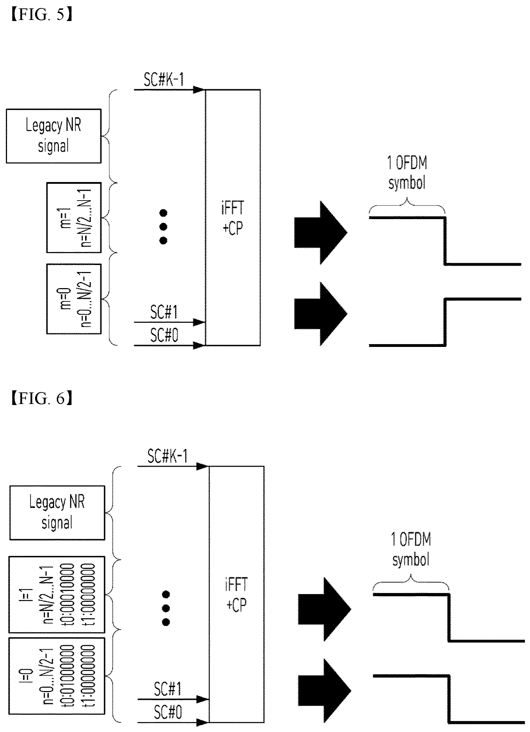

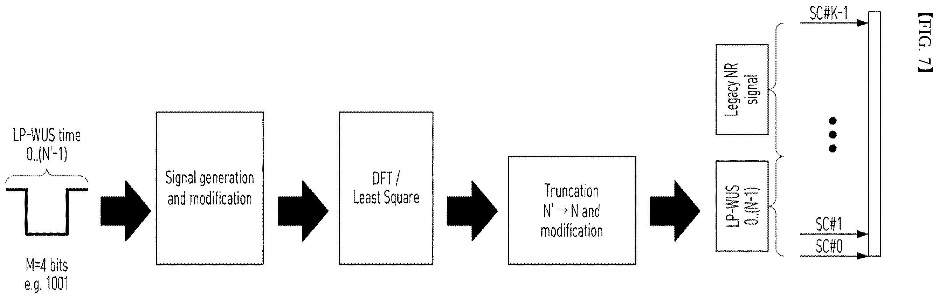

FIGS. 4 to 8 are diagrams illustrating methods for transmitting and receiving a signal according to the embodiments of the present disclosure.
FIGS. 9 to 12 illustrate devices according to an embodiment of the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR
- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

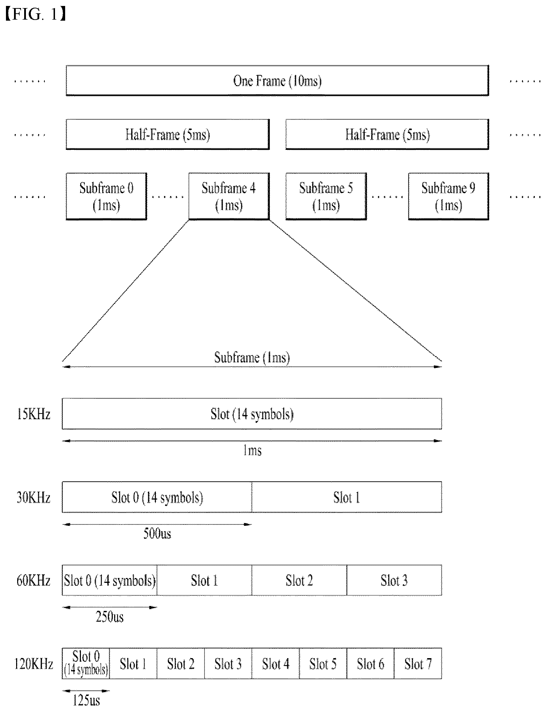

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subftame,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | subcarrier Spacing |
|---|---|---|
| FR1 | 450MHz - 7125MHz | 15, 30, 60kHz |
| FR2 | 24250MHz - 52600MHz | 60, 120, 240kHz |

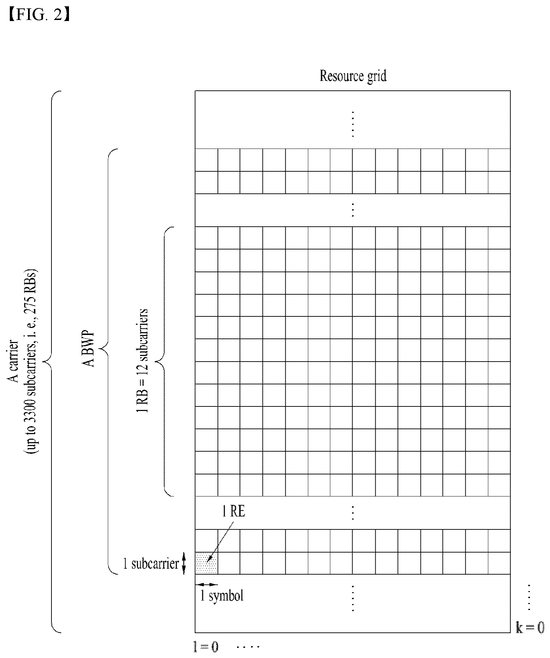

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

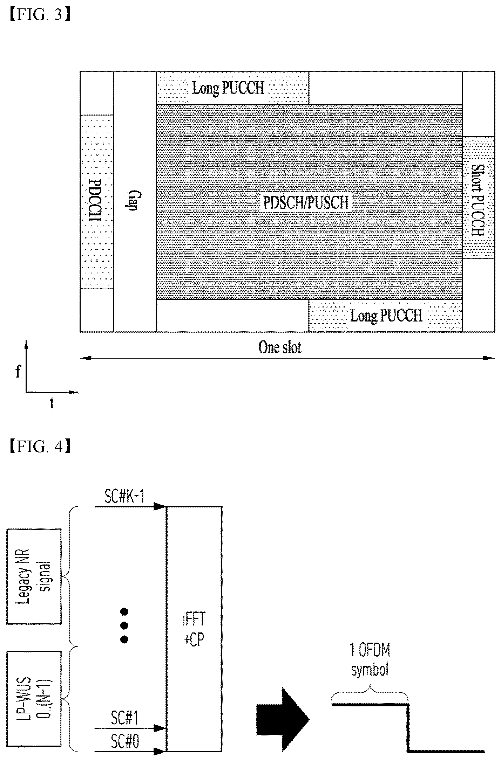

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### LP-WUS (Low Power Wake-Up Signal)

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

In the Rel-18 NR standard, discussions are ongoing to introduce a low-power wake-up signal (LP-WUS) and a separate receiver capable of receiving such a signal, known as a low-power wake-up receiver or low-power wake-up radio (LP-WUR), as a new power consumption reduction method, which is somewhat different from the power consumption reduction techniques for UEs introduced and supported in Rel-16/17. If a receiver in the UE (DL receiver) of the conventional NR system is referred to as a main radio/receiver (MR), the LP-WUR represents a separate receiver (i.e., companion radio/receiver) capable of being introduced to reduce the power consumption of the MR. The term LP-WUR may be simply referred to as LR.

Table 4 shows a part of the justification in the study item description (SID) for the corresponding discussion item and explains the purpose and background of the introduction of the LP-WUS/WUR.

**[Table 4]**

| |
|---|
| 5G systems are designed and developed targeting for both mobile telephony and vertical use cases. Besides latency, reliability, and availability, UE energy efficiency is also critical to 5G. Currently, 5G devices may have to be recharged per week or day, depending on individual's usage time. In general, 5G devices consume tens of milliwatts in RRC idle/inactive state and hundreds of milliwatts in RRC connected state. Designs to prolong battery life is a necessity for improving energy efficiency as well as for better user experience. |
| Energy efficiency is even more critical for UEs without a continuous energy source, e.g., UEs using small rechargeable and single coin cell batteries. Among vertical use cases, sensors and actuators are deployed extensively for monitoring, measuring, charging, etc. Generally, their batteries are not rechargeable and expected to last at least few years as described in TR 38.875. Wearables include smart watches, rings, eHealth related devices, and medical monitoring devices. With typical battery capacity, it is challenging to sustain up to 1-2 weeks as required. |
| The power consumption depends on the configured length of wake-up periods, e.g., paging cycle. To meet the battery life requirements above, eDRX cycle with large value is expected to be used, resulting in high latency, which is not suitable for such services with requirements of both long battery life and low latency. For example, in fire detection and extinguishment use case, fire shutters shall be closed and fire sprinklers shall be turned on by the actuators within 1 to 2 seconds from the time the fire is detected by sensors, long eDRX cycle cannot meet the delay requirements. eDRX is apparently not suitable for latency-critical use cases. Thus, the intention is to study ultra-low power mechanism that can support low latency in Rel-18, e.g. lower than eDRX latency. |
| Currently, UEs need to periodically wake up once per DRX cycle, which dominates the power consumption in periods with no signalling or data traffic. If UEs are able to wake up only when they are triggered, e.g., paging, power consumption could be dramatically reduced. This can be achieved by using a wake-up signal to trigger the main radio and a separate receiver which has the ability to monitor wake-up signal with ultra-low power consumption. Main radio works for data transmission and reception, which can be turned off or set to deep sleep unless it is turned on. |

Table 5 shows options for LP-WUS waveform generation methods that were agreed upon during the RAN1#112 standardization meeting (February 27 to March 3, 2023). The options may be understood as different methods for generating multi-carrier on-off keying (MC-OOK) and multi-carrier frequency shift keying (MC-FSK) waveforms.

**[Table 5]**

| |
|---|
| Agreement |
| For MC-ASK waveform generation, where K is size of iFFT of CP-OFDMA, N is number of SCs used by LP-WUS including potential guard-bands, study further |
| • Option OOK-1: Single-bit in 1 OFDM symbol, SCs of LP-WUS are |
| ∘ OOK=1 means all SCs are modulated |
| ∘ OOK=0 means all SCs are zero power (from base-band point of view) |
| ∘ Fig. 5 |
| • Option OOK-2: Parallel M-bit OOK in frequency domain, |
| ∘ N SCs of LP-WUS is further separated into M segments (M=2 in Figure) possibly with guard-bands in-between and/or around |
| ∘ OOK=1 means all SCs in segment are modulated |
| ∘ OOK=0 means all SCs in segment are zero power (from base-band point of view) |
| ∘ FFS architecture |
| ∘ Fig. 6. |
| • Option OOK-3: Multi-tone single-bit OOK |
| ∘ N SCs of LP-WUS is separated into L segments (L=2 on Figure) without guard-bands in-between segment, but possibly around |
| ∘ OOK=1 means 1 sub-carrier (known by UE) of each segment is modulated, rest of SC is zero power (from base-band point of view) |
| ∘ OOK=0 means all SCs in all segments are zero power (from base-band point of view) |
| ∘ FFS architecture |
| ∘ Fig. 7 |
| • Option OOK-4: Transform M-bit OOK in time domain |
| ∘ N SCs of OOK-1 are generated by a transformation (DFT/Least square) |
| ∘ N' samples are generated from M-bits |
| ∘ signal modification may or may NOT be used |
| ∘ truncation or other additional modification may or may NOT be used, if not used, ∘ N is the same as N' |
| ∘ N' can be the same as K |
| ∘ Fig. 8 |
| • FFS modulated SCs are e.g. QAM symbols, sequences or other signals |
| ∘ Companies to report their assumptions |
| • potential guard-band SCs are zero power (from base-band point of view) [optionally, 2 additional segments, one always modulated and one always zero power (from base-band point of view) can be transmitted] |
| • Other options are not precluded (e.g. OOK-1 with multiple bits in one OFDM symbol) |

The present disclosure proposes methods for generating and configuring waveforms or signal structures that may be used as the LP-WUS. In addition, the present disclosure proposes methods of monitoring the LP-WUS at the LP-WUR, synchronization signals capable of being transmitted for synchronization of the LP-WUR (hereinafter such a synchronization signal is referred to as an LP-SS), and operational methods for the LP-WUS/WUR.

### [1] Introduction

[1-1] In the conventional NR system, the BS generates and transmits OFDM signals for control/data signals. The UE may receive the OFDM signals using a receiver based on coherent detection/demodulation, which requires (relatively) precise synchronization. To this end, radio frequency (RF) modules and baseband modules such as a band-pass filter, fast Fourier transform (FFT), and local oscillator, which consume a lot of power, are required. However, to receive signals with low power at the LP-WUR, a receiver based on non-coherent detection/demodulation, which does not require such power-consuming modules, may be used. Additionally, on-off keying (OOK), frequency shift keying (FSK), and so on may be used in the LP-WUS for the receiver. On the other hand, if an LP-WUS, which is generated in a completely different way from conventional NR signals, is introduced, there may be a burden on network vendors to build transmitters to generate new signals.
[1-2] As one of the methods for transmitting OOK/FSK signals while using the OFDM transmitter of the BS as much as possible, (multi-carrier OOK) MC-OOK or multi-carrier FSK (MC-FSK) signals may be used. For example, the MC-OOK (or MC-FSK) signal may refer to a signal generated using only some of the OFDM subcarriers to create a time-domain waveform similar to the OOK (or FSK) waveform. Accordingly, reception based on non-coherent detection/demodulation may be achieved at the receiver while allowing the (maximal) use of the OFDM transmitter.

The following proposals will be described based on the assumption of the MC-OOK for the sake of convenience in explanation. Unless otherwise specified, the proposed methods described below may be equally applied to (or extended for) the MC-FSK.

### [2] Method of generating MC-FSK waveforms

In binary FSK, one bit may be transmitted using two different frequencies/subcarriers. Specifically, if one frequency/subcarrier is modulated, the other frequency/subcarrier remains unmodulated. The receiver may decode the transmitted bit by identifying which frequency/subcarrier is modulated.

On the other hand, in M-ary frequency shift keying (M-FSK), log2(M) bits may be transmitted using M different frequencies/subcarriers. Specifically, if one frequency/subcarrier is modulated, the remaining (M-1) frequencies/subcarriers remain unmodulated. The receiver may decode transmitted log2(M) bits by identifying which frequency/subcarrier is modulated.

FSK-1 may be considered as an operation of transmitting M bits using 2*M frequencies/subcarriers based on frequency division multiplexing (FDM) between M waveforms of binary FSK. FSK-2 may be considered as an operation of transmitting M bits using (2^M)-ary FSK. Table 6 compares frequencies required when M bits are transmitted using FSK-1 or FSK-2. Table 6 indicates the number of subcarriers required to transmit M bits when one subcarrier is used per segment. For example, for M=1, it means that two subcarriers are used.

**[Table 6]**

| M | FSK-1 | | FSK-2 | |
|---|---|---|---|---|
| | Use of M waveforms of 2-ary FSK | GB | Use of one waveform of (2^M)-ary FSK | GB |
| 1 | 2 | 0 | 2 | 0 |
| 2 | 4 | 1 | 4 | 0 |
| 3 | 6 | 2 | 8 | 0 |
| 4 | 8 | 3 | 16 | 0 |
| 5 | 10 | 4 | 32 | 0 |
| 6 | 12 | 5 | 64 | 0 |
| 7 | 14 | 6 | 128 | 0 |
| 8 | 16 | 7 | 256 | 0 |
| 9 | 18 | 8 | 512 | 0 |
| 10 | 20 | 9 | 1024 | 0 |
| 11 | 22 | 10 | 2048 | 0 |
| 12 | 24 | 11 | 4096 | 0 |

In Table 6, the term "GB" denotes the number of guard bands or guard tones located between adjacent segments. For FSK-1, when M segments are used, (M-1) GBs may be used. For FSK-2, since there is always one segment, it may be understood that there are no GBs between segments.

As shown in Table 2-1, FSK-2 has the drawback of using more frequency resources compared to FSK-1. However, FSK-2 generally achieves better reception performance relative to FSK-1.

On the other hand, a method of using M/N waveforms of (2^N)-ary FSK (hereafter referred to as FSK-3) may be used to transmit M bits. For example, when M=8 and N=4, two waveforms of 16-ary FSK (i.e., use of 16 subcarriers) may be frequency division multiplexed (FDMed). According to FSK-1, 16 subcarriers are required to transmit M=8 bits, while according to FSK-2, 256 subcarriers are required to transmit M=8 bits. Further, according to FSK-3, 32 subcarriers are required to transmit M=8 bits. In another example, when M=8 and N=2, four waveforms of 4-ary FSK (i.e., use of four subcarriers) may be FDMed. In this case, according to FSK-3, 16 subcarriers are required to transmit M=8 bits, which is the same as FSK-1.

Table 7 shows the number of subcarriers and the number of guard bands required when M bits are transmitted according to each FSK method.

**[Table 7]**

| M | FSK-1 | | FSK-2 | | FSK-3 | |
|---|---|---|---|---|---|---|
| | The number of subcarriers required when using M waveforms of 2-ary FSK | G B | The number of subcarriers required when using one waveform of (2^M)-ary FSK | G B | The number of subcarriers required when using M/N waveforms of (2^N)-ary FSK | GB |
| 1 | 2 | 0 | 2 | 0 | 2 (N=1, use of one 2-ary waveform) | 0 |
| 2 | 4 | 1 | 4 | 0 | 4 (N=1, use of two 2-ary waveforms) | 1 |
| | | | | | 4 (N=2, use of one 4-ary waveform) | 0 |
| 3 | 6 | 2 | 8 | 0 | 6 (N=1, use of three 2-ary waveforms) | 2 |
| | | | | | 8 (N=3, use of one 8-ary waveform) | 0 |
| 4 | 8 | 3 | 16 | 0 | 8 (N=1, use of four 2-ary waveforms) | 3 |
| | | | | | 8 (N=2, use of two 4-ary waveforms) | 1 |
| | | | | | 16 (N=4, use of one 16-ary waveform) | 0 |
| 5 | 10 | 4 | 32 | 0 | 10 (N=1, use of 5 2-ary waveforms) | 4 |
| | | | | | 32 (N=5, use of one 32-ary waveform) | 0 |
| 6 | 12 | 5 | 64 | 0 | 12 (N=1, use of 6 2-ary waveforms) | 5 |
| | | | | | 12 (N=2, use of three 4-ary waveforms) | 2 |
| | | | | | 16 (N=3, use of two 8-ary waveforms) | 1 |
| | | | | | 64 (N=6, use of one 64-ary waveform) | 0 |
| 7 | 14 | 6 | 128 | 0 | 14 (N=1, use of 7 2-ary waveforms) | 6 |
| | | | | | 128 (N=7, use of one 128-ary waveform) | 0 |
| 8 | 16 | 7 | 256 | 0 | 16 (N=1, use of 8 2-ary waveforms) | 7 |
| | | | | | 16 (N=2, use of four 4-ary waveforms) | 3 |
| | | | | | 32 (N=4, use of two 16-ary waveforms) | 1 |
| | | | | | 256 (N=8, use of one 256-ary waveform) | 0 |

As shown in Table 7, when M bits are transmitted through FSK-3, the amount of frequencies used may vary depending on N. For example, when M=8, if N=1, it operates similarly to FSK-1, and if N=8, it operates similarly to FSK-2. However, when N=2, 4-ary FSK may be used while using the same amount of frequencies as FSK-1. Accordingly, improvement in reception performance may be expected, and the number of GBs may be reduced. When N=4, 16-ary FSK is used, which provides improved performance compared to FSK-1 while using fewer frequency resources than FSK-2. When the same number of bits are transmitted, depending on the configurations of M and N, the performance may be improved compared to FSK-1 while reducing the number of required subcarriers compared to FSK-2.

Table 7 shows configurations from M=1 to M=8, but the configuration of FSK-3 may be equally applied when M>8. For example, when M=12, if N=1, binary-FSK is used and 24 subcarriers are required, which is equivalent to FSK-1. When N=2, 4-ary FSK is used, and 24 subcarriers are required. When N=3, 8-ary FSK is used, and 32 subcarriers are required. When N=4, 16-ary FSK is used, and 48 subcarriers are required.

N may be determined as one of the divisors of M (including 1 and M).

Alternatively, N may be determined as an integer between 1 and M. If N is not a divisor of M, ceil(M/N) waveforms of (2^N)-ary FSK may be used. For example, when M=3, if N=2, two waveforms of 4-ary FSK may be used. In this case, the same frequency resources (including the GB) need to be used as when FSK-2 are used in the case of M=3. However, the dimension of FSK is reduced, and thus receiver demodulation complexity may be lowered (compared to 8-ary FSK used by FSK-2).

If FSK-3 is used in generating the LP-WUS based on an MC-FSK waveform, the trade-off relationship between performance and required frequency spectrum may be adjusted. In this case, M and N may be predefined, configured through higher layer settings (e.g., RRC), or indicated to the UE via SIB1. For example, when the UE supports the LP-WUS, the UE may be configured with the values of N for specific value(s) of M through RRC signaling. Subsequently, the UE may determine the type of FSK and the number of subcarriers used for LP-WUS transmission based on the configured M and N as shown in Table 7. Alternatively, when the number of bits transmitted via the LP-WUS is predefined (i.e., M is fixed), if the UE is indicated with the value of N via SIB1, the UE may be aware of the FSK type and the amount of frequencies used for the LP-WUS.

A separate synchronization signal for an LP-WUS receiver (LP-WUR) may be generated based on FSK-3. The synchronization signal may be referred to as a low-power synchronization signal (LP-SS). In this case, M and N may be predefined, configured through higher layer settings (e.g., RRC), or instructed to the UE via SIB1.

When both LP-WUS and LP-SS waveforms are configured based on FSK-3, the M and N values for the LP-WUS and LP-SS may either be configured identically or separately. If the M and N values for the LP-WUS and LP-SS are configured identically, signaling overhead for configuring M and/or N may be reduced. However, the LP-SS may require a higher dimensionality of FSK than the LP-WUS due to required synchronization performance. Alternatively, the LP-WUS may require a different type of FSK from that of the LP-SS to transmit more data. In this case, it may be desirable to configure the M and N values separately for the LP-WUS and LP-SS.

In the above-described method, the frequency resources in Tables 6 and 7 are described based on the number of subcarriers. For example, for FSK-3, two subcarriers are assumed when M=1, 6 subcarriers are assumed when M=3 and N=1, and 8 subcarriers are assumed when N=3. However, the proposed methods may also be defined in terms of a plurality of sets of consecutive subcarriers. Specifically, for FSK-3 in Table 7, the amount of required frequencies based on M and N may be interpreted as the number K of groups of consecutive subcarriers. Here, K subcarrier groups may be referred to as segments. For example, FSK-3 may be defined as follows: two segments are used when M=1, 6 segments are used when M=3 and N=1, and 8 segments are used when N=3. In this case, K may be predefined or indicated to the UE via RRC or SIB1.

### [3] Precoding or sequence multiplying methods for generating MC-OOK and/or MC-FSK

OOK-2 in Table 5 is a method of dividing frequency resources allocated to the LP-WUS (e.g., N subcarriers) into M segments and transmitting a one-bit LP-WUS payload per segment during a OFDM symbol duration (corresponding to a related inverse fast Fourier transform (IFFT)). Each segment may consist of a plurality of consecutive subcarriers. When the frequency resources allocated to the LP-WUS are divided into M segments according to the OOK-2 method, a total of M bits may be transmitted. Each segment consists of N/M (=S) consecutive subcarriers. To allow a subcarrier to have a waveform in the form of OOK after passing the IFFT, an IFFT input may result from precoding the LP-WUS payload or multiplying the LP-WUS payload by a specific sequence with length S. Alternatively, for the purpose of reducing the peak-to-average power ratio (PAPR) of an IFFT output signal, such a sequence may be multiplied into the payload before IFFT processing.

In this case, sequences longer or shorter than the length-S sequence may be used to adjust the waveform of the IFFT output or to reduce the PAPR of the IFFT output. For example, even for the same type of sequences, a lower PAPR may be expected for the same payload when a sequence defined with length 2*S is used rather than the specific length-S sequence.

To this end, two or more segments may be grouped into a sub-group, and a sequence with a length corresponding to the sub-group (or a longer sequence) may be used. For example, if segment #1 = {n(0), n(1), ..., n(S-1)} and segment #2 = {n(S), n(S+1), ..., n(2*S-1)}, a single sequence defined with length 2*S may be multiplied by a concatenated segment with length 2*S, {segment#1, segment#2}, instead of multiplying segments #1 and #2 by the same sequence.

When two or more segments are grouped into a sub-group, the same sequence may be multiplied by the segments within the sub-group (or the same sequence may be cyclically shifted or phase rotated per segment). Different sequences may be used for each sub-group. According to this method, a lower PAPR may be expected compared to when a different sequence is used for each segment (depending on sequences).

In this case, adjacent segments within the sub-group are mapped to consecutive subcarriers with no GBs, and a specific number of subcarriers may be designated as a GB between adjacent sub-groups. For example, some subcarriers with the lowest indices (or low indices) and/or some subcarriers with the highest indices (or high indices) within each sub-group may be used as the GB.

Depending on sequences, a length-S sequence obtained by concatenating two sequences each defined with length S/2 may ensure a lower PAPR than one sequence defined with a length of S. To this end, each segment may be divided into sub-segments with length D. One segment consists of S/D sub-segments. The same (length-D) sequence may be multiplied by all sub-segments within one segment. Alternatively, the same sequence may be cyclically shifted or phase rotated and then multiplied by each sub-segment. For example, if the subcarrier indices of one segment are {n(0), n(1), ..., n(S-1)}, a length-S sequence, sequence#1 = {a(0), a(1), ..., a(S-1)}, may be multiplied by the LP-WUS payload and then input into the IFFT. On the other hand, if the segment is divided into two sub-segments, sub-segment #1 may be {n(0), n(1), ..., n(S/2-1)} and sub-segment #2 may be {n(S/2), n(S/2+1), ..., n(S-1)}. In this case, a length-S/2 sequence, sequence#2 = {b(0), b(1), ..., b(S/2-1)}, may be multiplied by sub-segment #1 and sub-segment #2.

In this case, adjacent sub-segments within the segment are mapped to consecutive subcarriers with no GBs. A specific number of subcarriers may be designated as a GB between adjacent segments. For example, some subcarriers with the lowest indices (or low indices) and/or some subcarriers with the highest indices (or high indices) within each sub-group may be used as the GB.

A sequence with a length corresponding to frequency resources allocated to the LP-WUS may also be used. For example, if a sequence = {s(0), s(1), ..., s(N-1)} is defined, an IFFT input may be created by multiplying the sequence sequentially from s(0) to s(N-1) in ascending order from the lowest index among the subcarriers allocated to the LP-WUS (among subcarriers that are not designated as the GB). In this case, if there is a GB between segments (or if there is a GB between sub-groups), the sequence mapped to the corresponding GB is not used. For this purpose, the length of the sequence for precoding the LP-WUS payload or the length of the sequence multiplied by the LP-WUS payload is determined as follows.
- Alt-1: The length of the sequence may be determined by the number of subcarriers in the entire segment including the GB, or
- Alt-2: The length of the sequence may be determined by the number of subcarriers in the entire segment excluding the GB.

As an example for Alt-1, when 128 subcarriers are configured for the LP-WUS, four segments are configured, each consisting of 32 subcarriers, and four subcarriers with the highest indices in each segment are designated as the GB, {s(0), ..., s(31-4)}, {s(32+0), ..., s(32+31-4)}, {s(64+0), ..., s(64+31-4)}, and {s(96+0), ..., s(96+31-4)} of a 128-length sequence (={s(0), s(1), ..., s(127)}) may be mapped to segment#1, segment#2, segment#3, and segment#4, respectively. When the sequence is mapped to each segment, the sequence may be mapped in ascending order of subcarrier index.

As an example for Alt-2, when 140 subcarriers are configured for the LP-WUS, four segments are configured, each consisting of 32 subcarriers, and four subcarriers are inserted as the GB between segments, {s(0), ..., s(31)}, {s(32+4), ..., s(32+31+4)}, {s(64+8), ..., s(64+8+31)}, and {s(96+12), ..., s(96+12+31)} of a 128-length sequence (={s(0), s(1), ..., s(139)}) may be mapped to segment#1, segment#2, segment#3, and segment#4, respectively. When the sequence is mapped to each segment, the sequence may be mapped in ascending order of subcarrier index.

OOK-1 in Table 4 may be understood as a case in which there is one segment with length N among the forms of OOK-2 (i.e., OOK-2 with M=1). When OOK-1 is used for the LP-WUS, the proposed methods may be applied by assuming that there is a single segment with length N.

Alternatively, OOK-1 in Table 4 may be understood as a case in which there are N segments each having length 1 (that is, each segment represents one subcarrier) among the forms of OOK-2 (i.e., OOK-2 with M=N). When OOK-1 is used for the LP-WUS, the proposed methods may be applied by assuming that there are N segments each having length 1.

OOK-3 in Table 4 is a method of dividing the frequency resources allocated to the LP-WUS (e.g., N subcarriers) into L segments (each segment may consist of a plurality of consecutive subcarriers), modulating only one subcarrier per segment, and skipping modulation on the other subcarriers (i.e., nulling or zero-power transmission).

If all L segments are used for a single UE, OOK-3 may be a method of transmitting a one-bit LP-WUS payload using L modulated subcarriers (across L segments). In this case, a specific sequence with length L for modulating the L subcarriers may be defined. Alternatively, when X segments are grouped, and when the L segments are divided into 'L/X' sub-groups, a sequence with length X may be applied to each sub-group. In this case, a specific sequence with length X may be defined, and the corresponding sequence may be applied identically to each sub-group. Alternatively, the corresponding sequence may be cyclically shifted or phase rotated and then applied to each sub-group.

If each LP-WUS to be transmitted to L UEs is allocated to each segment based on OOK-3, OOK-3 may be a method for transmitting a one-bit LP-WUS payload per segment to each UE. In this case, a sub-group consisting of X segments and a specific sequence with length X may be defined. The corresponding sequence may be applied identically to each sub-group. Alternatively, the sequence may be cyclically shifted or phase rotated and then applied to each sub-group. When N subcarriers allocated to the LP-WUS are allocated to different UE groups for paging, X may be appropriately configured/determined such that each UE group corresponds to a separate sub-group. The case where N subcarriers allocated to the LP-WUS are allocated to different UE groups for paging may be a case where a plurality of UE groups are FDMed within the N subcarriers.

### [4] Frequency hopping method during generation of MC-OOK and/or MC-FSK

When fixed frequency resources are always used for N subcarriers configured for the LP-WUS, if frequency selective narrow fading persists at the corresponding frequency positions, the LP-WUS may not be received properly for a long period of time. In addition, when the UE is located at a cell edge, the UE may experience relatively high interference from adjacent cells. Thus, it may be difficult for the UE to receive the LP-WUS. Therefore, a method of changing (hopping) frequency resources allocated to the LP-WUS, either statically or dynamically may be beneficial.

The frequency resources configured for the LP-WUS may be frequency hopped according to a predefined pattern. The bandwidth configured for the MR may consist of K subcarriers, of which N subcarriers may be configured for the LP-WUS. The positions of the N subcarriers may be determined based on a specific pattern such as a predefined equation.

The corresponding equation/pattern may be expressed as a function based on the slot index and/or symbol index of the MR or a function based on a system frame number (SFN). For example, when the indices of the K subcarriers are {s(0), ..., s(K-1)}, the N subcarriers allocated to the LP-WUS may be determined to be {s(0), ..., s(N-1)} if the slot index (or SFN) is even. The N subcarriers may be to be {s(K-1-(N-1)), ..., s(K-1)} if the slot index (or SFN) is odd. As another example, the N subcarriers allocated to the LP-WUS may be positioned at the center of the K subcarriers if the slot index (or SFN) is even. When the slot index (or SFN) is odd, the N subcarriers may be positioned at the start and end of the K subcarriers by K/2.

In addition, to avoid interference signals from adjacent cells, the hopping pattern may be a function of cell IDs. To avoid interference signals between different UEs, the hopping pattern may also be expressed as a function of UE IDs (or UE group IDs). As a simple example, the frequency resources for the LP-WUS allocated for each UE may be determined to have different offsets (from the lowest index subcarrier within the K subcarriers), depending on the UE ID.

For OOK-1, the positions of the N subcarriers configured for the LP-WUS may be determined within the K subcarriers according to the pattern. Similarly, for OOK-2, OOK-3, OOK-4, FSK-1, FSK-2, or FSK-3, the entire frequency resources allocated/configured for the LP-WUS may be positioned according to the specific pattern. Particularly, for OOK-2, the frequency resources for all M segments may be changed by the same pattern, or the frequency resources for each segment may be determined by a separate pattern. Similarly, for OOK-3, the frequency resources for all L segments may be determined by the same pattern, and the frequency resources for each segment may be determined by a separate pattern. When frequency hopping is performed per segment according to separate patterns, the hopping pattern may be a function determined by a segment index (or a specific subcarrier index within the segment). Additionally, for OOK-3, the position of one subcarrier (or two or more subcarriers) used for modulation within each segment may be changed according to a specific separate pattern (within subcarriers of the corresponding segment). In this case, the corresponding hopping pattern may be a function determined by each segment index and/or the subcarrier index used for modulation in each segment.

When the frequency resources are determined by separate patterns for each segment as in OOK-2 or OOK-3, the frequency resources may also be determined based on a slot index, symbol index, or SFN according to specific rules, similarly to the methods described above. The frequency resources may be determined in the form of offsets based on a UE ID, UE group

In addition, for OOK-2 or OOK-3, the frequency resources for transmitting the LP-WUS may be (dynamically) determined per sub-segment within each segment or per sub-group formed by grouping a plurality of segments (as described above).

### [5] Method of configuring LP-WUS and LP-SS with same waveform or different waveforms

A receiver that receives an LP-WUS (i.e., LP-WUR) may operate in a non-coherent manner. The receiver may detect and decode a separate LP-SS for stable reception of the LP-WUS. The LP-WUS and LP-SS signals may have the same waveform (to reduce the burden of detecting different waveforms at the UE). The MC-OOK or MC-FSK waveform generation method may be used to generate the LP-WUS and LP-SS according to one of the following alternatives.
- The waveforms of the LP-WUS and LP-SS may be generated using OOK-1.

∘ Alt-1: The frequency resources allocated to the LP-WUS and LP-SS may be configured independently. The frequency resources used for the LP-WUS and the frequency resources used for the LP-SS may each be configured separately (e.g., through RRC). However, the LP-WUS and LP-SS may be FDMed on different frequency resources within the same BWP (e.g., initial DL BWP or active DL BWP). In this case, the LP-WUS and LP-SS are capable of being transmitted simultaneously at the same time, which is expected to result in high resource efficiency.
∘ Alt-2: The frequency resources allocated to the LP-WUS and LP-SS may be the same. In this case, the resources for both the LP-WUS and LP-SS may be allocated through a single configuration (e.g., via RRC). The LP-WUS and LP-SS may be time division multiplexed (TDMed). Since the receiving filter in the LP-WUR only needs to match one frequency resource, this may reduce the complexity of the LP-WUR.
∘ Alt-3: The frequency resources allocated to the LP-WUS may be a part of the frequency resources allocated to the LP-SS (or vice versa). In this case, the frequency resources for the two signals may be set as different sizes within a single BWP (e.g., initial DL BWP or active DL BWP).

- The waveforms of the LP-WUS and LP-SS may be generated using OOK-2.

∘ Alt-1: The frequency resources allocated to the LP-WUS and LP-SS may be independently configured within the same BWP (e.g., initial DL BWP or active DL BWP). Alternatively, one segment for the LP-SS can be paired with two or more segments for the LP-WUS.
∘ Alt-2: The frequency resources allocated to the LP-WUS and LP-SS may be the same. In this case, resources for both LP-WUS and LP-SS can be allocated through a single setup (e.g., via RRC). In this case, the frequency resources allocated for the LP-SS may be the same as the entire N segments configured for the LP-WUS.
∘ Alt-3: The frequency resources allocated to the LP-WUS may be a part of the frequency resources allocated to the LP-SS within the same BWP (e.g., initial DL BWP or active DL BWP) (or vice versa). Some (e.g., a specific one) of the N segments configured for the LP-WUS may be configured/determined as the frequency resources for the LP-SS.

- The waveforms of the LP-WUS and LP-SS may be generated using OOK-3.

∘ Alt-1: The frequency resources allocated to the LP-WUS and LP-SS may be independently set within the same BWP (e.g., initial DL BWP or active DL BWP). One segment for the LP-SS may be FDMed with two or more segments for the LP-WUS.
∘ Alt-2: The frequency resources allocated to the LP-WUS and LP-SS may be the same. In this case, the resources for the LP-WUS and LP-SS may be allocated through a single configuration (e.g., via RRC). However, one (or more) non-zero power (NZP) subcarriers used for modulation of each segment for LP-WUS transmission and one (or more) NZP subcarriers used for each segment for LP-SS transmission may be configured/defined independently.
∘ Alt-3: The frequency resources allocated to the LP-WUS may be a part of the frequency resources allocated to the LP-SS within the same BWP (e.g., initial DL BWP or active DL BWP) (or vice versa). Some (e.g., a specific one) of the N segments configured for the LP-WUS may be configured/determined as the frequency resources for the LP-SS. Additionally, one (or more) NZP subcarriers used for modulation of each segment for LP-WUS transmission and one (or more) NZP subcarriers used for each segment for LP-SS transmission may be configured/defined independently.

- The waveforms of the LP-WUS and LP-SS may be generated using OOK-4.

∘ Alt-1: The frequency resources allocated to the LP-WUS and LP-SS may be independently configured within the same BWP (e.g., initial DL BWP or active DL BWP). In this case, the size of a discrete Fourier transform (DFT) used for generating the LP-WUS and the size of a DFT used for generating the LP-SS may be the same or multiples of each other.
∘ Alt-2: The frequency resources allocated to the LP-WUS and LP-SS may be the same. In this case, the resources for both the LP-WUS and LP-SS may be allocated through a single configuration (e.g., via RRC). In this case, the size of a DFT used for generating the LP-WUS and the size of a DFT used for generating the LP-SS may be the same or multiples of each other.
∘ Alt-3: The frequency resources allocated to the LP-WUS may be a part of the frequency resources allocated to the LP-SS within the same BWP (e.g., initial DL BWP or active DL BWP) (or vice versa). The size of a DFT used for generating the LP-WUS and the size of a DFT used for generating the LP-SS may be the same or multiples of each other.

- The waveforms of the LP-WUS and LP-SS may be generated using FSK-1.

∘ Alt-1: The frequency resources allocated to the LP-WUS and LP-SS may be independently configured within the same BWP (e.g., initial DL BWP or active DL BWP). Alternatively, a pair of segments for the LP-SS may be configured together with (or in association with) two or more pairs of segments for LP-WUS.
∘ Alt-2: The frequency resources allocated to the LP-WUS and LP-SS may be the same. In this case, the resources for both the LP-WUS and LP-SS may be allocated through a single configuration (e.g., via RRC). In this case, the frequency resources allocated for the LP-SS may be the same as the entire N segments configured for the LP-WUS.
∘ Alt-3: The frequency resources allocated to the LP-WUS may be a part of the frequency resources allocated to the LP-SS within the same BWP (e.g., initial DL BWP or active DL BWP) (or vice versa). Some (e.g., a specific one) of the N segments configured for the LP-WUS may be configured/determined as the frequency resources for the LP-SS.

- The waveforms of the LP-WUS and LP-SS may be generated using FSK-2.

∘ Alt-1: The frequency resources assigned to LP-WUS and LP-SS can be independently set within the same BWP (e.g., initial DL BWP or active DL BWP). Alternatively, segments for the LP-SS may be configured together with (or in association with) segments for the LP-WUS.
∘ Alt-2: The frequency resources allocated to the LP-WUS and LP-SS may be the same. In this case, the resources for both the LP-WUS and LP-SS may be allocated through a single configuration (e.g., via RRC). In this case, the frequency resources allocated for the LP-SS may be the same as the entire 2^M segments configured for the LP-WUS.
∘ Alt-3: The frequency resources allocated to the LP-WUS may be a part of the frequency resources allocated to the LP-SS within the same BWP (e.g., initial DL BWP or active DL BWP) (or vice versa). Some (e.g., a specific one) of the 2^M segments configured for the LP-WUS may be configured/determined as the frequency resources for the LP-SS.

The waveforms of the LP-WUS and LP-SS may be generated using FSK-2.
∘ Alt-1: The frequency resources allocated to the LP-WUS and LP-SS may be independently configured within the same BWP (e.g., initial DL BWP or active DL BWP). In addition, the M and/or N values for FSK-3 described in Section [1] may be configured independently.
∘ Alt-2: The frequency resources allocated to the LP-WUS and LP-SS may be the same. In this case, the resources for both the LP-WUS and LP-SS may be allocated through a single configuration (e.g., via RRC). However, the M and/or N values for FSK-3 described in Section [1] may be configured independently.
∘ Alt-3: The frequency resources allocated to the LP-WUS may be a part of the frequency resources allocated to the LP-SS within the same BWP (e.g., initial DL BWP or active DL BWP) (or vice versa). Some (e.g., a specific one) of the segments configured for the LP-WUS may be configured/determined as the frequency resources for the LP-SS.

MC-OOK and MC-FSK may have different sensitivities in reception performance under various conditions such as fading channel environment, reception signal-to-noise ratio (SNR), and mobility. In addition, the LP-WUS and LP-SS may have different requirements for SNR, target false alarm rate, and target dis-detection rate. Therefore, it may be advantageous for the LP-WUS and LP-SS to be generated with different waveforms.
- The waveform of the LP-WUS (or LP-SS) may be generated using one of OOK-1, OOK-2, OOK-3, or OOK-4, while the waveform of the LP-SS (or LP-WUS) may be generated using one of FSK-1, FSK-2, or FSK-3.

∘ For example, the LP-SS, which is capable of being transmitted at a (relatively) low data rate, may be generated through FSK-2, which requires a large amount of frequency resources but is capable of ensuring reception performance. The LP-WUS, which is transmitted at a (relatively) high data rate, may be generated through OOK-2 or OOK-4.

- The LP-WUS and LP-SS are both generated using MC-OOK waveforms, but different MC-OOK generation methods (e.g., one of OOK-1, OOK-2, OOK-3, or OOK-4) may be used.

∘ For example, the LP-SS, which is transmitted at a (relatively) low data rate, may be generated using OOK-1. The LP-WUS, which is transmitted at a (relatively) high data rate, may be generated using OOK-4.

- Both the LP-WUS and LP-SS are generated using MC-FSK waveforms, but different MC-FSK generation methods (e.g., one of FSK-1, FSK-2, or FSK-3) may be used.

∘ For example, the LP-SS, which is transmitted at a (relatively) low data rate, may be generated using FSK-2, which requires a large amount of frequency resources but is capable of ensuring reception performance. The LP-WUS, which is transmitted at a (relatively) high data rate, may be generated using FSK-1 or FSK-3.

### [6] Additional considerations

The following aspects may be additionally considered for each of the MC-OOK generation methods described above.
- For OOK-2 or OOK-3, a specific number (e.g., one) of reference subcarriers may be configured for each segment. The reference subcarriers are always transmitted with the same value, regardless of the LP-WUS payload. The receiver may use the reference subcarriers to estimate the received power of the LP-WUS. In addition, the receiver may use the reference subcarriers to calculate a threshold for envelope detection of the LP-WUS.
- In OOK-3, when only one subcarrier (SC#1) is modulated for each segment and the other subcarriers have zero power, if a reference subcarrier (SC#0) is configured for each segment, additional payload may be transmitted through the relative position difference between SC#1 and SC#0 (e.g., SCS between the two SCs). For example, when a specific segment is configured with 9 subcarriers and SC#0 for the corresponding segment is a first SC, if it is predefined that '0' is indicated when SC#1 is a fifth SC and '1' is indicated when SC#1 is a ninth SC, an additional one bit may be transmitted through the configurations of SC#1 and SC#0. As another example, when SC#0 is the middle SC of the segment, it may be predefined that '0' is indicated if "SC#1 index - SC#0 index" is positive and '1' is indicated if "SC#1 index - SC#0 index" is negative.
- In OOK-3, two or more subcarriers may be modulated for each segment. Specifically, if two subcarriers are modulated, two subcarriers among X subcarriers in a segment are used for modulation, while the remaining X-2 subcarriers may have zero power (i.e., are not modulated). The two subcarriers may be modulated identically for the LP-WUS payload. Alternatively, one of the two subcarriers may be modulated for the payload, while the other subcarrier may be used as a reference tone. The two subcarriers may be set as consecutive subcarriers or as two subcarriers spaced by X/2.

∘ Three or more subcarriers may be modulated for each segment. In this case, if Y subcarriers are used for modulation in each segment, one of the Y subcarriers may be used as a reference tone, while the remaining Y-1 subcarriers may be used for the payload. Additionally, the Y subcarriers may be set as consecutive subcarriers, or each of the Y subcarriers may be spaced apart by a specific offset (e.g., at intervals of floow(X/Y)) or more.

- In OOK-2 and/or OOK-3, each segment may be composed of consecutive subcarriers or subcarriers at a fixed interval. For example, if 20 subcarriers are allocated to the LP-WUS and four segments are configured, each segment may consist of five consecutive subcarriers or five subcarriers spaced apart by 4. For instance, segment #1 may be defined as a set of subcarriers with indices 4*n, segment #2 may be defined as a set of subcarriers with indices 4*n+1, segment #3 may be defined as a set of subcarriers with indices 4*n+2, and segment #4 may be defined as a set of subcarriers with indices 4*n+3.
- The frequency positions of the LP-WUS may be determined/configured within the bandwidth (or BWP) of the MR. However, since the frequency positions may only be known after the bandwidth of the MR is configured, there may be restrictions on LP-WUS transmission and reception beforehand. As an alternative, the frequency resource positions of the LP-WUS may be determined based on the channel raster or synchronization raster of the MR. These values may be determined based on each frequency range (FR), NR absolute radio frequency channel number (NR-ARFCN), or global synchronization channel number (GSCN). Therefore, even if the UE does not receive a configuration related to the bandwidth of the MR, the UE may determine the frequency resources of the LP-WUS based on these values. In this case, the positions of the frequency resources of the LP-WUS may be determined from the (nearest) channel raster or synchronization raster according to a specific rule (e.g., the positions are determined with a specific offset from these values).

The present disclosure is not limited to transmission and reception of UL and/or DL signals. For example, the present disclosure may also be used for direct communication between UEs. In addition, the term "BS" in the present disclosure may include a relay node as well as a base station. For example, the operations of the BS described in this document may be performed by base stations, but the operations may also be performed by relay nodes.

It is obvious that each of the examples of the proposed methods may also be included as one implementation method of the present disclosure, and thus each example may be regarded as a kind of proposed method. Although the above-described proposed methods may be implemented independently, some of the proposed methods may be combined (or merged) and implemented. In addition, it may be regulated that information on whether the proposed methods are applied (or information on rules related to the proposed methods) is transmitted from the BS to the UE or from the transmitting UE to the receiving UE in a predefined signal (e.g., physical layer signaling or higher layer signaling).

### Implementation Examples

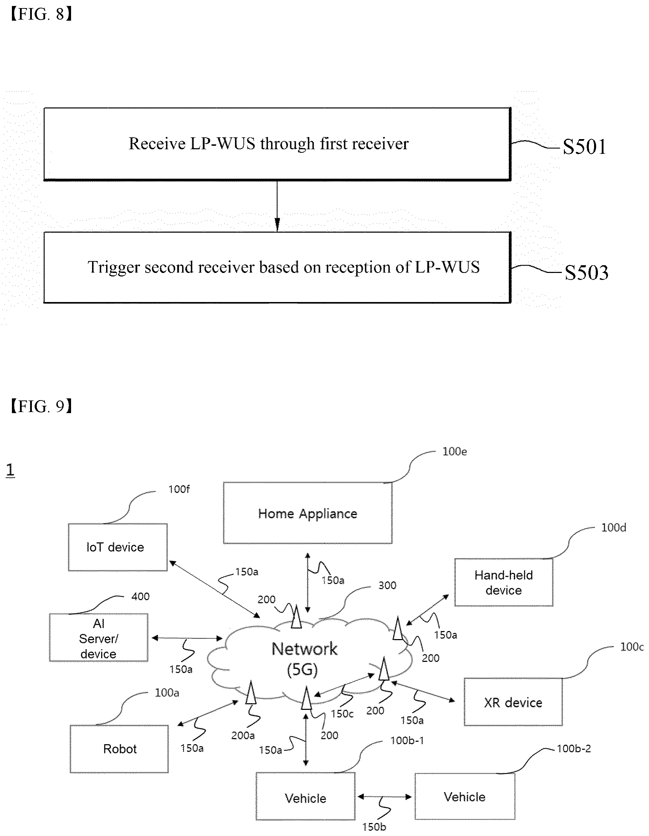

FIG. 8 is a flowchart of a signal transmission and reception method according to embodiments of the present disclosure.

Referring to FIG. 8, the signal transmission and reception method according to the embodiments of the present disclosure may be performed by a UE. The method may include receiving a signal through a first receiver (S501); and triggering (activating) a second receiver based on the reception of the signal (S503).

The signal may be the LP-WUS described in this specification. Even if the signal is referred to by another name, the signal may be considered as the LP-WUS described in this specification if the signal is intended to trigger operations of another receiver based on the reception thereof by a specific receiver.

In FIG. 8, the first receiver corresponds to a separate receiver (i.e., LP-WUR) for receiving an LP-WUS, and the second receiver corresponds to a main receiver (i.e., MR). The specific names may be changed to something other than the LP-WUR and MR, but the first receiver is designed to consume relatively less power than the second receiver. The main receiver may be a receiver of the conventional NR system. Even if the main receiver is a receiver of a communication system other than the NR system, the receiver may be considered as the main receiver if the receiver is triggered based on signal reception by another receiver that consumes relatively less power.

In FIG. 9, triggering the second receiver may mean activating (waking up) the second receiver. When the second receiver is not activated, the second receiver may be in an ultra deep sleep state. The ultra deep sleep state means that most circuits of the second receiver (or more than a certain percentage of all circuits) are turned off. Alternatively, when the second receiver is not activated, the second receiver may be in a deep sleep or light sleep state, where the circuits are not turned off but the second receiver does not monitor DL signals such as a PDCCH.

In addition to the operations of FIG. 8, one or more of the operations described in Sections [1] to [6] may be also performed

For example, according to Section [4], when the bandwidth of the MR includes K REs, N REs allocated to the LP-WUS may be determined as a function of a symbol index, slot index, and/or SFN of the MR. In relation to the operations of FIG. 8, when a bandwidth for the second receiver includes a plurality of first subcarriers, the positions of second subcarriers allocated to the signal in FIG. 8 among the first subcarriers may be understood as being determined based on a time domain index for the second receiver.

In addition, the positions of the second subcarriers may be determined in consideration of a UE ID, UE group ID, and/or cell ID.

The signal in FIG. 8 may be generated based on the methods described in Section [2] and/or [3]. For example, according to Section [2], the signal may be generated based on FSK. In addition, according to Section [3], the signal may be generated based on OOK.

As a specific example, the signal may be generated based on the FSK-3 method described in Section [2]. According to FSK-3 described in Section [2], the number of second subcarriers required to transmit the signal may be determined based on the number M of bits transmitted via FSK-3 and the factor N for determining the order of (2^N)-ary FSK when FSK-3 includes M/N waveforms of (2^N)-ary FSK. According to FSK-3, modulation based on (2^N)-ary FSK is performed M/N times for the second subcarriers. Therefore, the second subcarriers may be divided into M/N segments, each including 2^N subcarriers. Referring to Table 7, a GB may be positioned between the segments, and the number of GBs may be determined as M/N-1.

As another specific example, the signal may be generated based on the OOK method described in Section [3]. According to the OOK method, M segments may be required to transmit M bits via the signal. Each segment is composed of consecutive second subcarriers. Assuming that the number of second carriers included in each segment is S, the total number of second subcarriers allocated for the signal may be M*S. To ensure that the signal has an OOK waveform, a sequence with a specific length may be multiplied by the payload of the signal.

If the M segments are grouped into M/N segment groups, each including N segments, different sequences with length N may be multiplied by each segment group. Alternatively, the same sequence with length S may be cyclically shifted or phase rotated and then multiplied by the N segments within each segment group. Therefore, when the M segments are grouped into the M/N segment groups, each including the N segments, different segment groups are modulated based on different sequences. A GB may be configured between the segment groups, but no GB may be configured between the segments.

If the M segments are each divided into M/N sub-segments, the same sequence with length N may be multiplied by each of the sub-segments included in one segment. The corresponding sequence may be cyclically shifted or phase rotated and then multiplied by each of the sub-segments within the segment. Therefore, when the M segments are each divided into the M/N sub-segments, the M/N sub-segments included in one segment are modulated based on the same sequence with length N. A GB may be configured between the segments, but no GB may be configured between the sub-segments.

A single sequence with a length corresponding to the total number of second subcarriers allocated to the signal may also be used. If the second subcarriers are divided into M segments and there is a GB between the segments, it may be determined whether the GB is included in the length of the single sequence.

Referring to Section [5], the first receiver may further receive an LP-SS in addition to an LP-WUS. The LP-SS may be simply described as a synchronization signal. Based on Section [5], the LP-WUS and LP-SS may be generated with the same waveform or different waveforms.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 9 illustrates a communication system 1 applied to the present disclosure.

Referring to FIG. 9, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

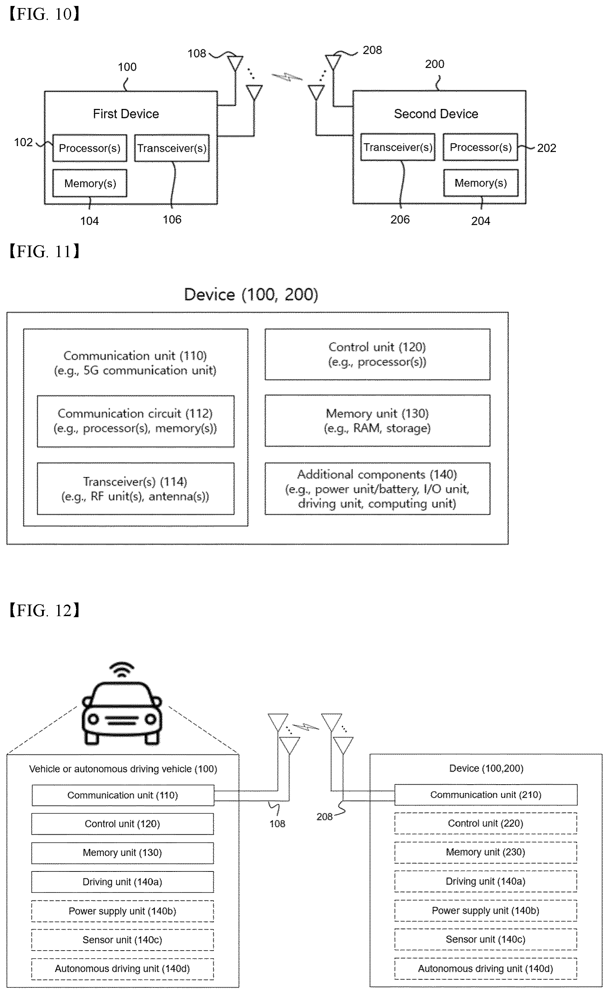

FIG. 10 illustrates wireless devices applicable to the present disclosure.

Referring to FIG. 10, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 9.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

FIG. 11 illustrates another example of a wireless device applied to the present disclosure. The wireless device may be implemented in various forms according to a use case/service (refer to FIG. 9).

Referring to FIG. 11, wireless devices 100 and 200 may correspond to the wireless devices 100 and 200 of FIG. 10 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 10. For example, the transceiver(s) 114 may include the one or more transceivers 106 and 206 and/or the one or more antennas 108 and 208 of FIG. 10. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 9), the vehicles (100b-1 and 100b-2 of FIG. 9), the XR device (100c of FIG. 9), the hand-held device (100d of FIG. 9), the home appliance (100e of FIG. 9), the IoT device (100f of FIG. 9), a digital broadcasting terminal, a hologram device, a public safety device, an MTC device, a medical device, a FinTech device (or a finance device), a security device, a climate/environment device, the AI server/device (400 of FIG. 9), the BSs (200 of FIG. 9), a network node, or the like. The wireless device may be mobile or fixed according to a use case/service.

In FIG. 11, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 12 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 12, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 11, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

As described above, the present disclosure is applicable to various wireless communication systems.

## Claims

1. A method of transmitting and receiving signals by a user equipment (UE) in a wireless communication system, the method comprising:
receiving a signal through a first receiver of the UE; and
triggering a second receiver of the UE based on the reception of the signal,
wherein based on a bandwidth for the second receiver including a plurality of first subcarriers, positions of second subcarriers allocated to the signal among the first subcarriers are determined based on a time-domain index for the second receiver.

2. The method of claim 1, wherein the signal is a low-power wake-up signal (LP-WUS)

3. The method of claim 1, wherein the time-domain index includes at least one of a symbol index, a slot index, or a system frame number (SFN).

4. The method of claim 1, wherein the positions of the second subcarriers are determined based on at least one of an identifier (ID) of the UE or an ID of a cell

5. The method of claim 1, wherein the signal is generated based on frequency shift keying (FSK).

6. The method of claim 5, wherein a number of the second subcarriers is determined based on a natural number M and a natural number N, where M is a number of bits transmitted through the signal and N is a factor for determining an order of the FSK.

7. The method of claim 6, wherein the second subcarriers are divided into (M / N) segments, and
wherein each of the segments is a unit in which modulation based on the FSK is performed.

8. The method of claim 7, wherein a number of second subcarriers included per segment and the order of the FSK are determined as 2^N.

9. The method of claim 1, wherein the signal is generated based on on-off keying (OOK).

10. The method of claim 9, wherein the second subcarriers are divided into M segments, wherein M is a number of bits transmitted through the signal.

11. The method of claim 10, wherein the M segments are grouped into (M / N) segment groups, each including N segments, and
wherein the segment groups are modulated based on different sequences.

12. The method of claim 10, wherein each of the M segments is divided into (M / N) sub-segments, and
wherein (M / N) sub-segments belonging to one segment are modulated based on a same sequence with a length of N.

13. The method of claim 10, wherein the M segments are modulated based on a single sequence with a length corresponding to a number of the second subcarriers.

14. The method of claim 1, further comprising receiving a synchronization signal related to the reception of the signal through the first receiver,
wherein the signal and the synchronization signal are generated with a same waveform.

15. The method of claim 2, further comprising receiving a synchronization signal related to the reception of the signal through the first receiver,
wherein the signal and the synchronization signal are generated with different waveforms based on a data rate.

16. The method of claim 1, wherein the first receiver consumes relatively less power than the second receiver.

17. A user equipment (UE) configured to transmit and receive signals in a wireless communication system, the UE comprising:
at least one transceiver;
at least one processor; and
at least one memory operably connected to the at least one processor and configured to store instructions that, when executed, cause the at least one processor to perform specific operations comprising:
receiving a signal through a first receiver of the UE; and
triggering a second receiver of the UE based on the reception of the signal,
wherein based on a bandwidth for the second receiver including a plurality of first subcarriers, positions of second subcarriers allocated to the signal among the first subcarriers are determined based on a time-domain index for the second receiver.

18. An apparatus for a user equipment (UE), the apparatus comprising:
at least one processor; and
at least one computer memory operably connected to the at least one processor and configured to, when executed, cause the at least one processor to perform operations comprising:
receiving a signal through a first receiver of the UE; and
triggering a second receiver of the UE based on the reception of the signal,
wherein based on a bandwidth for the second receiver including a plurality of first subcarriers, positions of second subcarriers allocated to the signal among the first subcarriers are determined based on a time-domain index for the second receiver.

19. A computer-readable non-volatile storage medium having at least one computer program configured to cause a user equipment (UE) having at least one processor to perform operations comprising:
receiving a signal through a first receiver of the UE; and
triggering a second receiver of the UE based on the reception of the signal,
wherein based on a bandwidth for the second receiver including a plurality of first subcarriers, positions of second subcarriers allocated to the signal among the first subcarriers are determined based on a time-domain index for the second receiver.
